(19) **Europäisches Patentamt / European Patent Office / Office européen des brevets**

(11) **EP 3 390 808 B1**

(12) # EUROPÄISCHE PATENTSCHRIFT

(45) Veröffentlichungstag und Bekanntmachung des Hinweises auf die Patenterteilung:
**23.09.2020  Patentblatt 2020/39**

(21) Anmeldenummer: **16801516.2**

(22) Anmeldetag: **28.11.2016**

(51) Int Cl.:
**F02M 65/00** *(2006.01)*

(86) Internationale Anmeldenummer:
**PCT/EP2016/078959**

(87) Internationale Veröffentlichungsnummer:
**WO 2017/102292 (22.06.2017 Gazette 2017/25)**

(54) **VERFAHREN UND VORRICHTUNG ZUR BESTIMMUNG DER EINSPRITZRATE EINES EINSPRITZVENTILS**

METHOD AND DEVICE FOR DETERMINING THE INJECTION RATE OF AN INJECTION VALVE

PROCÉDÉ ET DISPOSITIF POUR DÉTERMINER LE DÉBIT D'INJECTION D'UN INJECTEUR DE CARBURANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2015  DE 102015225736**

(43) Veröffentlichungstag der Anmeldung:
**24.10.2018  Patentblatt 2018/43**

(73) Patentinhaber: **Robert Bosch GmbH**
**70442 Stuttgart (DE)**

(72) Erfinder:
• **MAJER, Clemens**
**74379 Ingersheim (DE)**
• **FISCHER, Thomas**
**70499 Stuttgart (DE)**
• **HARTUNG, Iris**
**73614 Schorndorf (DE)**

(56) Entgegenhaltungen:
**EP-A1- 2 318 689     EP-A1- 2 821 759**
**WO-A2-02/054038     FR-A1- 2 795 139**

EP 3 390 808 B1

**Beschreibung**

Die Erfindung betrifft ein Verfahren zur Bestimmung der Einspritzrate eines Einspritzventils mit den Merkmalen des Oberbegriffs des Anspruchs 1. Ferner wird eine Vorrichtung zur Bestimmung der Einspritzrate angegeben, die zur Durchführung des erfindungsgemäßen Verfahrens geeignet ist.

Stand der Technik

In der Entwicklung und Funktionsprüfung von Einspritzventilen, insbesondere von Einspritzventilen zum Einspritzen von Brennstoff in einen Brennraum einer Brennkraftmaschine, hat sich zur hochgenauen Messung der Einspritzmenge ein Verfahren bewährt, das beispielhaft in der Offenlegungsschrift DE 101 07 032 A1 beschrieben ist. Bei diesem Verfahren wird ein Prüffluid von einem Einspritzventil in eine zumindest bereichsweise von einem Kolben begrenzte Messkammer eingespritzt. Der durch die Einspritzung bewirkte Hub des Kolbens wird erfasst und der Berechnung der Einspritzmenge zugrunde gelegt. Um die Genauigkeit der Berechnung zu erhöhen, wird ferner der Druck des Prüffluids in der Messkammer erfasst und bei der Berechnung berücksichtigt. Gleiches gilt für die Temperatur in der Messkammer, da diese ebenso wie der Druck Einfluss auf die Rohdichte des Prüffluids hat.
Die Einspritzmenge lässt sich dann auf der Grundlage der folgenden Gleichung berechnen:

$$m(\rho, x) = \rho(T, p) \cdot x \cdot A_{Kolben}$$

wobei "$\rho$" die Rohdichte des Prüffluids in Abhängigkeit von der veränderlichen Temperatur "$T$" des Prüffluids und dem Druck "$p$" in der Messkammer, "$x$" der gemessene Kolbenhub und "$A_{Kolben}$" die Querschnittsfläche des Kolbens ist.
Durch zeitliche Ableitung der Einspritzmenge lässt sich - im Prinzip - nach folgender Gleichung die Einspritzrate bestimmen:

$$\frac{dm}{dt} = \frac{dx}{dt} \cdot A_{Kolben} \cdot \rho(T, p)$$

Wegen der dynamischen Eigenschaften des die Messkammer begrenzenden Kolbens werden die während der Einspritzung erfassten Messsignale jedoch von störenden Schwingungen des Feder-Masse-Systems überlagert, so dass dieser Ansatz zur Bestimmung der Einspritzrate für eine zeitlich hoch aufgelöste Analyse des Einspritzverlaufs, die für die Optimierung des Einspritzventils erforderlich ist, nur begrenzt anwendbar ist.
In der Offenlegungsschrift DE 10 2013 212 419 A1 wird daher bereits ein Verfahren zur Bestimmung der Einspritzrate eines Einspritzventils bzw. Injektors vorgeschlagen, bei dem - aufbauend auf dem zuvor beschriebenen Verfahren - zusätzlich eine Korrektur der Einspritzrate auf Basis einer detektierten Schwingung des Kolbens durchgeführt wird. Die Korrektur erfolgt auf Basis eines mathematischen Modells, das eine gedämpfte Schwingung mit zumindest einer gedämpften Schwingungsfrequenz berücksichtigt. Die Bewegung des Kolbens wird hierzu in eine Schwingungsbewegung und in eine residuelle Bewegung aufgeteilt, wobei die Schwingungsbewegung mittels des mathematischen Modells beschrieben wird und von den Bewegungsdaten der Bewegung des Kolbens die berechneten Bewegungsdaten aufgrund der Schwingungsbewegung subtrahiert werden, um die Bewegungsdaten der residuellen Bewegung zu bestimmen. Aus den Bewegungsdaten der residuellen Bewegung oder aus dem Einspritzratenanteil der residuellen Bewegung wird dann die Einspritzrate bestimmt.
Da bei der Entwicklung und Funktionsprüfung von Einspritzventilen immer mehr Merkmale anhand des Einspritzratenverlaufs bestimmt werden, beispielsweise der Einspritzbeginn, das Einspritzratenmaximum und/oder das Einspritzende, bedarf es genauer Messwerte, um zu verlässlichen Ergebnissen zu kommen.
Ausgehend von dem vorstehend genannten Stand der Technik liegt der vorliegenden Erfindung daher die Aufgabe zugrunde, ein Verfahren und eine Vorrichtung anzugeben, welche eine möglichst präzise Bestimmung der Einspritzrate eines Einspritzventils ermöglichen.
Zur Lösung der Aufgabe werden das Verfahren mit den Merkmalen des Anspruchs 1 und die Vorrichtung mit den Merkmalen des Anspruchs 5 angegeben. Vorteilhafte Weiterbildungen der Erfindung sind den jeweiligen Unteransprüchen zu entnehmen.

Offenbarung der Erfindung

Bei dem vorgeschlagenen Verfahren wird die Einspritzrate eines Einspritzventils ebenfalls mit Hilfe eines mathematischen Modells bestimmt. Dem mathematischen Modell werden Messwerte zugrunde gelegt, die den Hub eines eine Messkammer begrenzenden Kolbens während der Einspritzung eines Prüffluids in die Messkammer umfassen. Ferner wird eine Korrektur der Einspritzrate auf Basis eines weiteren Messwerts durchgeführt. Erfindungsgemäß wird als weiterer Messwert der Druck in einem Adaptervolumen verwendet, über welches das Einspritzventil mit der Messkammer verbunden ist.

Die Einspritzung des Prüffluids in die Messkammer erfolgt demnach nicht unmittelbar, sonder mittelbar über ein Adaptervolumen, das in einem Adapter zur Aufnahme des Einspritzventils ausgebildet ist. Der Adapter erleichtert die Verbindung des Einspritzventils mit der Messeinrichtung, insbesondere kann das Einspritzventil über den Adapter fluiddicht mit der Messeinrichtung verbunden werden. Dies gilt insbesondere, wenn eine entsprechende Dichtung vorgesehen ist.

Die Verwendung eines Adapters zur Aufnahme des Einspritzventils ist aus dem Stand der Technik grundsätzlich bekannt. Vernachlässigt wurde bislang jedoch, dass das Adaptervolumen zu einer zeitlichen Verzögerung und/oder Dämpfung der Einspritzung und somit zu einem zeitversetzten und/oder abgerundeten Einspritzratenverlauf führt, wenn lediglich der Kolbenhubverlauf bei der Berechnung berücksichtigt wird. Hinzu kommt, dass auch eine Adapterdichtung aufgrund ihres viskoelastischen Verhaltens zu einer Schwingung führen kann, die den Kolbenhub überlagert.

Wird jedoch entsprechend dem erfindungsgemäßen Verfahren zusätzlich der Druck im Adaptervolumen erfasst und bei der Einspritzratenberechnung berücksichtigt, können sowohl schwingungsbedingte Störgrößen, als auch Zeitverzögerungen bzw. Verrundungen des Einspritzratenverlaufs beseitigt werden.

Die Einspritzrate kann dann wie folgt berechnet werden:

$$\frac{dm}{dt} = V_a \cdot \left.\frac{\partial \rho_a}{\partial p_a}\right|_T \cdot \dot{p}_a(t) + \dot{x}(t) \cdot A_{Kolben} \cdot \rho(p,T)$$

wobei "$V_a$" für das Adaptervolumen, "$\rho_a$" für die Rohdichte des Prüffluids im Adaptervolumen und "$p_a$" für den Druck im Adaptervolumen stehen.

Der Druckverlauf im Adaptervolumen stellt somit neben dem Kolbenhubverlauf sowie der Temperatur und dem Druck in der Messkammer eine weitere Messgröße dar, die der Berechnung der Einspritzrate nach dem erfindungsgemäßen Verfahren zugrunde gelegt wird. Das Adaptervolumen und die Querschnittsfläche des Kolbens stellen bekannte Größen dar. Die Berechnung erfolgt vorzugsweise in Echtzeit.

Der zusätzliche Geräteaufwand zur Durchführung des erfindungsgemäßen Verfahrens ist gering. Es bedarf lediglich eines weiteren Drucksensors, der dem Adaptervolumen zugeordnet ist, um während der Einspritzung den Druck im Adaptervolumen zu erfassen. Das heißt, dass bereits vorhandene Messeinrichtungen verwendet werden können, sofern sie um einen entsprechenden Drucksensor erweitert werden.

Die Temperatur und der Druck in der Messkammer werden vorzugsweise mittels eines Temperatursensors und eines Drucksensors erfasst, die jeweils der Messkammer zugeordnet sind. Die Erfassung der Temperatur und des Drucks in der Messkammer ist zur Bestimmung der Rohdichte des Prüffluids erforderlich.

Weiterhin bevorzugt werden die während der Einspritzung erfassten Messwerte als Messsignale an eine Steuereinheit weitergeleitet. Um auf der Basis der Messsignale die Einspritzrate zu berechnen, ist vorzugsweise in der Steuereinheit das mathematische Modell zur Berechnung der Einspritzrate hinterlegt.

Die ferner zur Lösung der eingangs genannten Aufgabe vorgeschlagene Vorrichtung zur Bestimmung der Einspritzrate eines Einspritzventils umfasst eine von einem Kolben begrenzte Messkammer, die über ein Adaptervolumen, das in einem Adapter zur Aufnahme des Einspritzventils ausgebildet ist, mit dem Einspritzventil verbindbar ist, so dass mittels des Einspritzventils ein Prüffluid in die Messkammer einspritzbar ist. Ferner umfasst die Vorrichtung eine Wegmesseinrichtung zur Erfassung des Kolbenhubs während einer Einspritzung. Erfindungsgemäß ist dem Adaptervolumen ein Drucksensor zugeordnet, mittels dessen der Druck im Adaptervolumen während einer Einspritzung erfassbar ist.

Durch den Drucksensor, der dem Adaptervolumen zugeordnet ist, ist die vorgeschlagene Vorrichtung zur Durchführung des zuvor beschriebenen erfindungsgemäßen Verfahrens geeignet. Denn neben dem Kolbenhubverlauf ist auch der Druckverlauf im Adaptervolumen erfassbar, anhand dessen eine Korrektur des Einspritzratenverlaufs vorgenommen wird. Durch Schwingungen bedingte Störgrößen sowie Zeitverzögerungen bzw. Dämpfungen des Einspritzratenverlaufs aufgrund des zwischengeschalteten Adaptervolumens können auf diese Weise beseitigt werden.

Bevorzugt ist zwischen dem Adaptervolumen und der Messkammer ein Spritzdämpfer angeordnet. Der Spritzdämpfer verhindert, dass die Einspritzstrahlen des über das Adaptervolumen in die Messkammer eingespritzten Prüffluids direkt auf die Oberseite des Kolbens auftreffen und diesen zum Schwingen bringen.

Der Spritzdämpfer führt zu einem Staudruck im Adaptervolumen und damit zu einer weiteren Verzögerung bzw. Dämpfung der Einspritzung. Mittels des erfindungsgemäßen Verfahrens bzw. der erfindungsgemäßen Vorrichtung wird jedoch auch der Staudruck im Adaptervolumen während einer Einspritzung erfasst, so dass der Staudruckverlauf durch den Spritzdämpfer bei der Berechnung der Einspritzrate berücksichtigt wird. Die Berechnung kommt somit zu sehr genauen Ergebnissen.

Ferner wird vorgeschlagen, dass der Messkammer ein Temperatursensor und ein Drucksensor zugeordnet sind. Mittels dieser Sensoren sind die Temperatur und der Druck in der Messkammer während einer Einspritzung erfassbar. Diese Messwerte ermöglichen eine genaue Bestimmung der Rohdichte des Prüffluids.

Vorteilhafterweise umfasst die Vorrichtung zur Bestimmung der Einspritzrate eines Einspritzventils eine Steuereinheit. Die Steuereinheit ermöglicht eine genaue Berechnung der Einspritzrate anhand der ihr zur Verfügung gestellten Messwerte. Um die Messwerte an die Steuereinheit weiterzuleiten, ist diese bevorzugt über Steuerleitungen mit der Wegmesseinrichtung, dem Druck-und Temperatursensor in der Messkammer und dem Drucksensor in dem Adaptervolumen verbunden. Die Messwerte werden demnach als Messsignale von der jeweiligen Messeinrichtung an die Steuereinheit geschickt. Da die Berechnung der Einspritzrate mit Hilfe des mathematischen Modells erfolgt, ist dieses weiterhin vorzugsweise als Computerprogramm in der Steuereinheit hinterlegt.

Bevorzugt ist die Messkammer der erfindungsgemäßen Vorrichtung mit einem Entleerventil verbunden. Der Druck in der Messkammer ist durch eine Gegendruckkraft steuerbar. Da der in der Messkammer vorhandene Druck eine Druckkraft auf den die Messkammer begrenzenden Kolben bewirkt, ist dieser ferner bevorzugt auf seiner der Messkammer abgewandten Seite von einer Gegendruckkraft beaufschlagt, die durch ein weiteres druckbeaufschlagtes Volumen, insbesondere ein Gasvolumen, und/oder durch eine Feder erzeugt wird.

Darüber hinaus bevorzugt ist die erfindungsgemäße Vorrichtung zur Durchführung des erfindungsgemäßen Verfahrens geeignet.

Das erfindungsgemäße Verfahren und die erfindungsgemäße Vorrichtung werden nachfolgend anhand der beigefügten Zeichnungen näher erläutert. Diese zeigen:

Fig. 1   einen schematische Darstellung einer erfindungsgemäßen Vorrichtung und

Fig. 2   ein Diagramm zur Darstellung eines korrigierten Einspritzratenverlaufs.

Ausführliche Beschreibung der Zeichnungen

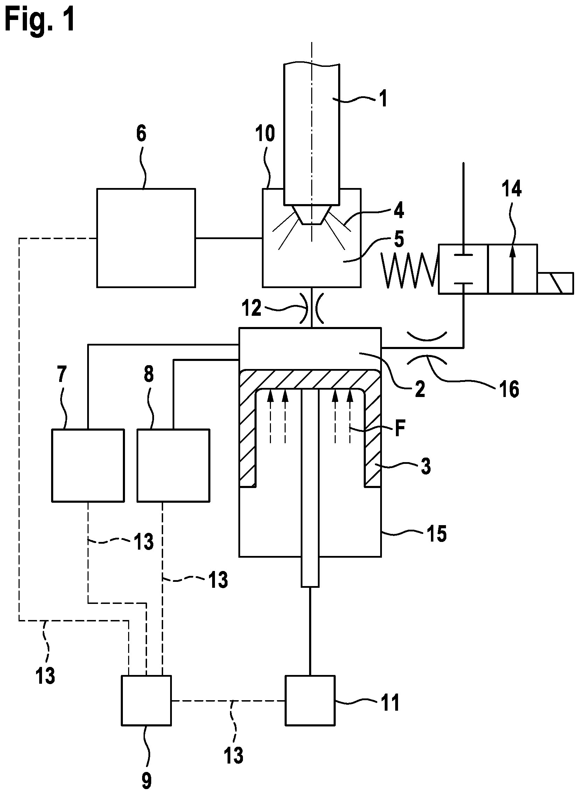

Die in der Fig. 1 schematisch dargestellte erfindungsgemäße Vorrichtung umfasst einen in einem Zylinder 15 hubbeweglich aufgenommenen Kolben 3, der innerhalb des Zylinders 15 eine Messkammer 2 begrenzt. Die Messkammer 2 ist über eine Drossel 16 mit einem Entleerventil 14 verbunden. An der der Messkammer 2 abgewandten Seite des Kolbens 3 liegt ein Gegendruck an, der eine den Kolben 3 in Richtung der Messkammer 2 beaufschlagende Druckkraft F bewirkt, so dass ein Kräftegleichgewicht am Kolben 3 herrscht und der Druck in der Messkammer 2 steuerbar ist.

Zur Bestimmung der Einspritzrate eines Einspritzventils 1 ist in die Messkammer 2 mittels des Einspritzventils 1 ein Prüffluid 4 einspritzbar. Die Einspritzung bewirkt einen Hub des Kolbens 3 entgegen der Druckkraft F, der mittels einer Wegmesseinrichtung 11 erfassbar ist. Vorliegend erfolgt die Wegmessung induktiv, wobei die Messwerte als Messsignale über eine Steuerleitung 13 an eine Steuereinheit 9 weitergeleitet werden. Die Steuereinheit 9 ist über Steuerleitungen 13 ferner mit einem Temperatursensor 7 und einem Drucksensor 8 verbunden, die der Erfassung der Temperatur und des Drucks in der Messkammer 2 dienen. Diese Messwerte beeinflussen die Rohdichte des Prüffluids 4 und sind demnach für die Berechnung der Einspritzrate relevant.

Die Einspritzung des Prüffluids 4 in die Messkammer 2 erfolgt vorliegend mittelbar über ein Adaptervolumen 5, das über einen Spritzdämpfer 12 mit der Messkammer 2 verbunden ist. Das Adaptervolumen 5 ist in einem Adapter 10 ausgebildet, welcher der Aufnahme des Einspritzventils 1 dient. Der zwischen dem Adaptervolumen 5 und der Messkammer 2 ausgebildete Spritzdämpfer 12 soll ein direktes Auftreffen der Einspritzstrahlen des Prüffluids 4 auf den die Messkammer 2 begrenzenden Kolben 3 und damit eine unerwünschte Schwingungsanregung des Kolbens 3 verhindern.

Die lediglich mittelbar über das Adaptervolumen 5 und den Spritzdämpfer 12 bewirkte Einspritzung des Prüffluids 4 in die Messkammer 2 hat eine Verzögerung bzw. Dämpfung der Einspritzung zur Folge. Diese wiederum führt zu einem zeitversetzten und abgerundeten Einspritzratenverlauf. Es bedarf demnach einer Korrektur der ermittelten Einspritzrate.

Die in der Fig. 1 dargestellte erfindungsgemäße Vorrichtung weist hierzu einen weiteren Drucksensor 6 auf, der dem Adaptervolumen 5 zugeordnet ist, so dass hierüber der Druck im Adaptervolumen 5 erfassbar ist. Eine Steuerleitung 13 verbindet den Drucksensor 6 mit der Steuereinheit 9, so dass die vom Drucksensor 6 erfassten Messwerte als Messsignale an die Steuereinheit 9 weitergeleitet werden, um sie bei der Berechnung der Einspritzrate zu berücksichtigen. Die Einspritzrate kann dann nach folgender Gleichung berechnet werden:

$$\frac{dm}{dt} = V_a \cdot \left.\frac{\partial \rho_a}{\partial p_a}\right|_T \cdot \dot{p}_a(t) + \dot{x}(t) \cdot A_{Kolben} \cdot \rho(p,T)$$

Die Dichteänderungen in Abhängigkeit von der vorliegenden Temperatur

$$\left.\frac{\partial \rho_a}{\partial p_a}\right|_T$$

werden als Kennfeld hinterlegt.

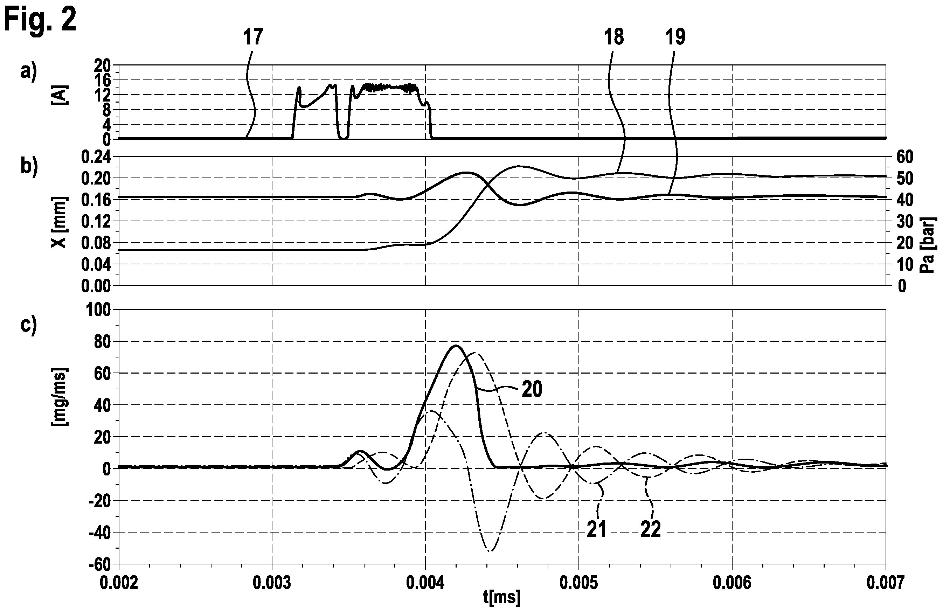

Der mittels des weiteren Drucksensors 6 erfasste Druck im Adaptervolumen 5 ermöglicht nicht nur die Beseitigung störender Schwingungsanteile, sondern lässt ferner eine Korrektur der Einspritzrate in Bezug auf einen zeitlichen Versatz und/oder eine Dämpfung bzw. Verrundung zu, wie dies beispielhaft in dem Diagramm der Fig. 2 dargestellt ist.

Die im oberen Bildteil a) dargestellte Kurve zeigt die Dauer der Bestromung eines Aktuators (nicht dargestellt) eines Einspritzventils 1, dessen Einspritzrate es zu bestimmen gilt. In Abhängigkeit von der Bestromung des Aktuators öffnet und schließt das Einspritzventil 1, so dass eine Einspritzung vorgenommen wird. Hierbei wird ein Prüffluid 4 über das Adaptervolumen 5 in die Messkammer 2 eingespritzt. Die Einspritzung hat einen Hub x des die Messkammer 2 begrenzenden Kolbens 3 zur Folge, dessen Verlauf im mittleren Bildteil b) als Kurve 18 dargestellt ist. Die Kurve 19 gibt den Verlauf des Drucks $p_a$ im Adaptervolumen 5 wieder.

Im unteren Bildteil c) ist der Einspritzratenverlauf dargestellt, wobei die Kurve 20 den auf Basis der vorstehend genannten Gleichung korrigierten Einspritzratenverlauf darstellt. Denn wie ferner im Bildteil c) dargestellt, weist ein allein auf Basis des Kolbenhubverlaufs berechneter Einspritzratenverlauf (Kurve 21) eine zeitliche Verschiebung gegenüber der Kurve 20 sowie störende Schwingungsanteile auf. Diese können beseitigt werden, indem zusätzlich der Druck $p_a$ im Adaptervolumen 5 erfasst und zur Korrektur der Einspritzrate verwendet wird. Die Kurve 22 zeigt den Verlauf einer Einspritzrate, die aus dem Druck $p_a$ berechnet worden ist.

**Patentansprüche**

1. Verfahren zur Bestimmung einer Einspritzrate eines Einspritzventils (1) mit Hilfe eines mathematischen Modells, dem Messwerte zugrunde gelegt werden, die den Hub (x) eines eine Messkammer (2) begrenzenden Kolbens (3) während der Einspritzung eines Prüffluids (4) in die Messkammer (2) umfassen, wobei eine Korrektur der Einspritzrate auf Basis eines weiteren Messwerts durchgeführt wird,
   **dadurch gekennzeichnet, dass** der Druck ($p_a$) in einem Adaptervolumen (5), über welches das Einspritzventil (1) mit der Messkammer (2) verbunden ist, als weiterer Messwert zur Korrektur der Einspritzrate verwendet wird.

2. Verfahren nach Anspruch 1,
   **dadurch gekennzeichnet, dass** während der Einspritzung der Druck ($p_a$) im Adaptervolumen (5) mittels eines Drucksensors (6) erfasst wird, der dem Adaptervolumen (5) zugeordnet ist.

3. Verfahren nach Anspruch 1 oder 2,
   **dadurch gekennzeichnet, dass** während der Einspritzung die Temperatur (T) und der Druck (p) in der Messkammer (2) mittels eines Temperatursensors (7) und eines Drucksensors (8) erfasst werden, die der Messkammer (2) zugeordnet sind.

4. Verfahren nach einem der vorhergehenden Ansprüche,
   **dadurch gekennzeichnet, dass** die während der Einspritzung erfassten Messwerte als Messsignale an eine Steuereinheit (9) weitergeleitet werden, in der vorzugsweise das mathematische Modell zur Berechnung der Einspritzrate hinterlegt ist.

5. Vorrichtung zur Bestimmung der Einspritzrate eines Einspritzventils (1), umfassend eine von einem Kolben (3) begrenzte Messkammer (2), die über ein Adaptervolumen (5), das in einem Adapter (10) zur Aufnahme des Einspritzventils (1) ausgebildet ist, mit dem Einspritzventil (1) verbindbar ist, so dass mittels des Einspritzventils (1) ein Prüffluid in die Messkammer (2) einspritzbar ist, ferner umfassend eine Wegmesseinrichtung (11) zur Erfassung des Hubs (x) des Kolbens (3) während einer Einspritzung,

**dadurch gekennzeichnet, dass** dem Adaptervolumen (5) ein Drucksensor (6) zugeordnet ist, mittels dessen der Druck ($p_a$) im Adaptervolumen (5) während einer Einspritzung erfassbar ist.

**6.** Vorrichtung nach Anspruch 5,
**dadurch gekennzeichnet, dass** zwischen dem Adaptervolumen (5) und der Messkammer (2) ein Spritzdämpfer (12) angeordnet ist.

**7.** Vorrichtung nach Anspruch 5 oder 6,
**dadurch gekennzeichnet, dass** der Messkammer (2) ein Temperatursensor (7) und ein Drucksensor (8) zugeordnet sind, mittels derer die Temperatur (T) und der Druck (p) in der Messkammer (2) während einer Einspritzung erfassbar sind.

**8.** Vorrichtung nach einem der Ansprüche 5 bis 7,
**dadurch gekennzeichnet, dass** eine Steuereinheit (9) zur Berechnung der Einspritzrate vorgesehen ist, wobei vorzugsweise die Steuereinheit (9) über Steuerleitungen (13) mit der Wegmesseinrichtung (11), dem Drucksensor (6), dem Temperatursensor (7) und dem Drucksensor (8) verbunden ist.

**9.** Vorrichtung nach einem der Ansprüche 5 bis 8,
**dadurch gekennzeichnet, dass** die Messkammer (2) mit einem Entleerventil (14) verbunden ist.

**10.** Vorrichtung nach einem der Ansprüche 5 bis 9,
**dadurch gekennzeichnet, dass** der Druck in der Messkammer (2) über eine Gegenkraft des Kolbens (3) steuerbar ist.

**11.** Vorrichtung nach einem der Ansprüche 5 bis 10,
**dadurch gekennzeichnet, dass** in der Steuereinheit (9) zur Berechnung des Druckanteils an der korrigierten Einspritzrate ein Kennfeld für $\left.\dfrac{\partial \rho_a}{\partial p_a}\right|_T$ hinterlegt ist.

**12.** Vorrichtung nach einem der Ansprüche 5 bis 11,
**dadurch gekennzeichnet, dass** die Vorrichtung zur Durchführung des Verfahrens nach einem der Ansprüche 1 bis 4 geeignet ist.

**Claims**

**1.** Method for determining an injection rate of an injection valve (1) using a mathematical model on which measured values which comprise the travel (x) of a piston (3) bounding a measuring chamber (2) during the injection of a test fluid (4) into the measuring chamber (2) are based, wherein a correction of the injection rate is carried out on the basis of a further measured value,
**characterized in that** the pressure ($p_a$) in an adapter volume (5) via which the injection valve (1) is connected to the measuring chamber (2) is used as a further measured value for correcting the injection rate.

**2.** Method according to Claim 1,
**characterized in that** during the injection the pressure ($p_a$) in the adapter volume (5) is detected by means of a pressure sensor (6) which is assigned to the adapter volume (5).

**3.** Method according to Claim 1 or 2,
**characterized in that** during the injection the temperature (T) and the pressure (p) in the measuring chamber (2) are detected by means of a temperature sensor (7) and a pressure sensor (8) which are assigned to the measuring chamber (2).

**4.** Method according to one of the preceding claims,
**characterized in that** the measured values which are detected during the injection are passed on as measurement signals to a control unit (9) in which the mathematical model for calculating the injection rate is preferably stored.

**5.** Device for determining the injection rate of an injection valve (1), comprising a measuring chamber (2) which is bounded by a piston (3) and which can be connected to the injection valve (1) via an adapter volume (5) which is formed in an adapter (10) for receiving the injection valve (1), with the result that a test fluid can be injected into the measuring chamber (2) by means of the injection valve (1), also comprising a travel measuring device (11) for detecting the travel (x) of the piston (3) during an injection,
**characterized in that** a pressure sensor (6) by means of which the pressure ($p_a$) in the adapter volume (5) can be detected during an injection is assigned to the adapter volume (5).

6. Device according to Claim 5,
**characterized in that** an injection damper (12) is arranged between the adapter volume (5) and the measuring chamber (2).

7. Device according to Claim 5 or 6,
**characterized in that** the measuring chamber (2) is assigned a temperature sensor (7) and a pressure sensor (8) by means of which the temperature (T) and the pressure (p) in the measuring chamber (2) during an injection can be detected.

8. Device according to one of Claims 5 to 7,
**characterized in that** a control unit (9) for calculating the injection rate is provided, wherein the control unit (9) is preferably connected via control lines (13) to the travel measuring device (11), the pressure sensor (6), the temperature sensor (7) and the pressure sensor (8).

9. Device according to one of Claims 5 to 8,
**characterized in that** the measuring chamber (2) is connected to an emptying valve (14).

10. Device according to one of Claims 5 to 9,
**characterized in that** the pressure in the measuring chamber (2) can be controlled by means of an opposing force of the piston (3).

11. Device according to one of Claims 5 to 10,

**characterized in that** a characteristic diagram for $\left.\frac{\partial \rho_a}{\partial p_a}\right|_T$ is stored in the control unit (9) in order to calculate the pressure component in the corrected injection rate.

12. Device according to one of Claims 5 to 11,
**characterized in that** the device is suitable for carrying out the method according to one of Claims 1 to 4.

**Revendications**

1. Procédé de détermination d'un débit d'injection d'une soupape d'injection (1) à l'aide d'un modèle mathématique basé sur des valeurs de mesure qui comprennent la course (x) d'un piston (3), délimitant une chambre de mesure (2), lors de l'injection d'un fluide de test (4) dans la chambre de mesure (2), le débit d'injection étant corrigé sur la base d'une autre valeur de mesure,
**caractérisé en ce que** la pression ($p_a$) dans un volume d'adaptateur (5), par le biais duquel la soupape d'injection (1) est reliée à la chambre de mesure (2), est utilisée comme valeur de mesure supplémentaire pour corriger le débit d'injection.

2. Procédé selon la revendication 1,
**caractérisé en ce que** la pression ($p_a$) dans le volume d'adaptateur (5) est détectée pendant l'injection au moyen d'un capteur de pression (6) qui est associé au volume d'adaptateur (5).

3. Procédé selon la revendication 1 ou 2,
**caractérisé en ce que** la température (T) et la pression (p) dans la chambre de mesure (2) sont acquises pendant l'injection au moyen d'un capteur de température (7) et d'un capteur de pression (8) qui sont associés à la chambre de mesure (2).

4. Procédé selon l'une des revendications précédentes, **caractérisé en ce que** les valeurs de mesure acquises pendant l'injection sont transmises sous forme de signaux de mesure à une unité de commande (9) dans laquelle le modèle mathématique destiné au calcul du débit d'injection est de préférence mémorisé.

5. Dispositif de détermination du débit d'injection d'une soupape d'injection (1), comprenant une chambre de mesure (2) qui est délimitée par un piston (3) et qui peut être reliée à la soupape d'injection (1) par le biais d'un volume d'adaptateur (5) formé dans un adaptateur (10) pour recevoir la soupape d'injection (1), de sorte qu'un fluide de test puisse être injecté dans la chambre de mesure (2) au moyen de la soupape d'injection (1), comprenant en outre un moyen de mesure de déplacement (11) destiné à acquérir la course (x) du piston (3) pendant une injection, **caractérisé en ce que** le volume d'adaptateur (5) est associé à un capteur de pression (6) au moyen duquel la pression ($p_a$) dans le volume d'adaptateur (5) peut être acquise pendant une injection.

6. Dispositif selon la revendication 5,
**caractérisé en ce qu'**un modérateur de pulvérisation (12) est disposé entre le volume d'adaptateur (5) et la chambre de mesure (2).

7. Dispositif selon la revendication 5 ou 6,
**caractérisé en ce que** la chambre de mesure (2) est associée à un capteur de température (7) et à un capteur de pression (8) au moyen desquels la température (T) et la pression (p) dans la chambre de mesure (2) peuvent être acquises pendant une injection.

8. Dispositif selon l'une des revendications 5 à 7,
**caractérisé en ce qu'**une unité de commande (9) est prévue pour calculer le débit d'injection, l'unité de commande (9) étant de préférence reliée par le biais de lignes de commande (13) au moyen de mesure de déplacement (11), au capteur de pression (6), au capteur de température (7) et au capteur de pression (8) .

9. Dispositif selon l'une des revendications 5 à 8,
**caractérisé en ce que** la chambre de mesure (2) est reliée à une soupape de purge (14).

10. Dispositif selon l'une des revendications 5 à 9,
**caractérisé en ce que** la pression dans la chambre de mesure (2) peut être commandée par le biais d'une force antagoniste du piston (3).

11. Dispositif selon l'une des revendications 5 à 10,
**caractérisé en ce qu'**un diagramme caractéristique relatif à $\left.\dfrac{\partial \rho_a}{\partial p_a}\right|_T$ est mémorisé dans l'unité de commande (9) pour calculer le pourcentage de pression du débit d'injection corrigé.

12. Dispositif selon l'une des revendications 5 à 11,
**caractérisé en ce que** le dispositif est approprié pour mettre en œuvre le procédé selon l'une des revendications 1 à 4.

# Fig. 1

**Fig. 2**

**IN DER BESCHREIBUNG AUFGEFÜHRTE DOKUMENTE**

**In der Beschreibung aufgeführte Patentdokumente**

- DE 10107032 A1
- DE 102013212419 A1